Europäisches Patentamt

European Patent Office

Office européen des brevets

(19)

(11) Numéro de publication : **0 340 106 B1**

(12)                    **FASCICULE DE BREVET EUROPEEN**

(45) Date de publication du fascicule du brevet :
23.06.93 Bulletin 93/25

(51) Int. Cl.⁵ : **G21C 19/30, C22B 9/02**

(21) Numéro de dépôt : **89401181.6**

(22) Date de dépôt : **25.04.89**

(54) **Procédé de regénération d'un piège froid placé dans un circuit de métal liquide.**

(30) Priorité : **27.04.88 FR 8805602**

(43) Date de publication de la demande :
**02.11.89 Bulletin 89/44**

(45) Mention de la délivrance du brevet :
**23.06.93 Bulletin 93/25**

(84) Etats contractants désignés :
**DE FR GB**

(56) Documents cités :
**EP-A- 0 012 074
FR-A- 2 312 276
PATENT ABSTRACTS OF JAPAN, vol. 5, no.
111 (C-63)[783], 18 juillet 1981, page 163 C 63;
& JP-A-56 51 540
PATENT ABSTRACTS OF JAPAN, vol. 9, no. 96
(C-278)[1819], 25 avril 1985, page 54 C 278; &
JP-A-59 226 132**

(73) Titulaire : **COMMISSARIAT A L'ENERGIE
ATOMIQUE
31/33, rue de la Fédération
F-75015 Paris Cédex 15 (FR)**

(72) Inventeur : **Desreumaux, Jacqueline
Les Eyssouquettes Mirabeau
F-84120 Pertuis (FR)**
Inventeur : **Rebiere, Jean
61, Boulevard Joseph Vallier
F-38000 Genoble (FR)**

(74) Mandataire : **Poulin, Gérard et al
Société BREVATOME 25, rue de Ponthieu
F-75008 Paris (FR)**

EP 0 340 106 B1

Jouve, 18, rue Saint-Denis, 75001 PARIS

## Description

L'invention concerne un procédé de régénération d'un piège froid contenant des impuretés solides telles que des oxydes, des hydrures et des tritiures.

L'invention s'applique notamment à la régénération des pièges froids utilisés comme instruments de purification dans les circuits de métaux liquides tels que les circuits caloporteurs des réacteurs à neutrons rapides.

Dans les circuits de métaux liquides, les pièges froids sont des appareils qui permettent de cristalliser les impuretés telles que les oxydes, les hydrures et les tritiures, en fonctionnant à plus basse température que le fluide du circuit.

Après une certaine période d'utilisation, l'accumulation des impuretés solides à l'intérieur des pièges froids entraîne la saturation de ces derniers, qui deviennent alors inaptes à remplir leur fonction de filtre.

Une première solution consiste à stocker les pièges froids après leur saturation et à les remplacer par des pièges neufs. Cependant, compte tenu des dimensions et du prix des pièges froids, cette solution n'est pas satisfaisante du point de vue économique.

Il est donc économiquement souhaitable de régénérer les pièges froids saturés, afin de pouvoir les réutiliser ultérieurement sans avoir à les stocker ni à les remplacer.

Différents procédés de régénération des pièges froids ont été étudiés. Le principe de ces procédés repose sur la transformation des impuretés solides en effluents gazeux et liquides. Dans le cas particulier des pièges froids équipant les circuits de sodium liquide d'un réacteur nucléaire à neutrons rapides, le piège froid à régénérer contient généralement de l'hydrure de sodium et de l'oxyde de sodium.

Comme l'illustre notamment le document FR-A-2 312 276, il a déjà été envisagé de régénérer un pièce froid contenant de l'oxyde de sodium et de l'hydrure de sodium en portant ce piège à une température de 450°C environ pendant plusieurs heures, sous atmosphère d'argon. On réalise ainsi la décomposition thermique de l'hydrure et de l'oxyde de sodium avant d'effectuer le relâchement de l'hydrogène formé dans l'atmosphère et la vidange de l'hydroxyde de sodium formé dans un réservoir annexe.

Par ailleurs, le document EP-A-0 012 074 enseigne de régénérer un piège froid d'un circuit de sodium en introduisant de l'hydroxyde de sodium liquide dans le piège, puis en chauffant ce dernier afin de transformer totalement l'hydrure et l'oxyde de sodium en deux phases liquides qui sont évacuées par vidange.

Comme tous les autres procédés de régénération connus à ce jour, ces documents n'apportent aucune solution au problème posé par la présence de tritium dans les effluents gazeux rejetés dans l'atmosphère. Leur exploitation industrielle se heurte donc actuellement aux réglementations qui interdisent ou limitent très sévèrement les rejets tritiés dans le milieu naturel et notamment dans l'atmosphère.

La présente invention a précisément pour objet un procédé de régénération dont la mise en oeuvre est particulièrement simple et permet d'opérer éventuellement sans manutention du piège froid, comme c'est déjà le cas pour certains procédés connus, tout en éliminant tout rejet atmosphérique d'effluents gazeux radioactifs et notamment de tritium.

A cet effet, il est proposé un procédé de régénération d'un piège froid d'un métal liquide tel que le sodium contenant des impuretés solides appartenant aux groupes des hydrures et des oxydes, ce procédé comprenant :

- une étape de chauffage du piège à une température comprise entre 200°C et 320°C ;
- une étape d'élimination de sodium liquide par vidange du piège ;
- une étape de décomposition thermique des impuretés solides, par augmentation de la température du piège jusqu'à 430° ± 20°C, pour former d'une part, des effluents liquides et, d'autre part, des effluents gazeux contenant de l'hydrogène et/ou ses isotopes ;
- une étape d'élimination des effluents liquides par vidange du piège ; et
- une étape d'absorption des effluents gazeux sur un matériau métallique, pour former un hydrure stable à température ambiante, en faisant communiquer le piège à régénérer avec un réservoir contenant le matériau métallique ;

l'étape de décomposition thermique des impuretés solides comprenant une première opération de transformation totale des oxydes, selon la réaction effectuée à une température supérieure à environ 410°C

$$Na_2O + 1/2H_2 \rightarrow NaL_2 + NaOHL_3,$$

$L_2$ et $L_3$ signifiant respectivement que le sodium et l'hydroxyde de sodium sont à l'état liquide, préalable à l'étape d'absorption des effluents gazeux, et une deuxième opération de décomposition thermique totale des hydrures selon la réaction effectuée à une température supérieure à environ 420°C

$$NaH \rightarrow NaL_1 + 1/2H_2,$$

$L_1$ signifiant que le sodium est à l'état liquide et contient de l'hydrogène en solution, pendant laquelle s'effectue l'absorption des effluents gazeux.

Le matériau métallique sur lequel sont absorbés les effluents gazeux est choisi de préférence dans le groupe comprenant $LaNi_5$, FeTi, U, V, $CaNi_5$, $Mg_2Ni$ et $Mg_2Cu$.

Il peut être nécessaire d'injecter de l'hydrogène dans le piège à régénérer afin de réaliser la transformation complète des oxydes, si la quantité d'hydrogène formé par la décomposition des hydrures est insuffisante ou encore si l'on veut éviter la formation d'hydroxyde de sodium tritié.

Pour réaliser l'absorption des effluents gazeux sur le matériau métallique, on fait communiquer le piège à régénérer avec un réservoir contenant ce matériau métallique. Dans le cas particulier où le matériau métallique est du $Mg_2Ni$, on chauffe ce deuxième réservoir à une température comprise entre 150°C et 300°C. Lorsque le piège à régénérer est mis en communication avec le réservoir, on augmente la température du piège à régénérer jusqu'à une valeur supérieure à la température de décomposition thermique des impuretés solides et on maintient cette température comprise entre 450°C et 500°C pendant toute la durée de la décomposition des impuretés solides.

Lorsque la décomposition thermique des impuretés solides est terminée, on isole le piège à régénérer du réservoir puis on élimine les effluents liquides. Les températures du piège et du réservoir peuvent alors être abaissées jusqu'à la température ambiante, à laquelle l'hydrure formé par l'absorption des effluents gazeux sur le matériau métallique est stable. Il est ainsi possible de stocker l'hydrogène et le tritium à basse pression pendant une durée indéterminée et, le cas échéant, de les récupérer en chauffant à nouveau le réservoir à une température comprise entre 250°C et 300°C.

Un mode de réalisation particulier du procédé de régénération selon l'invention va maintenant être décrit, à titre d'exemple nullement limitatif, en se référant aux dessins annexés dans lesquels :

- la figure 1 représente de façon schématique un piège froid équipé d'une installation permettant de mettre en oeuvre le procédé de régénération selon l'invention ; et
- la figure 2 est une courbe représentant, à température ambiante et dans le cas du système $Mg_2NiH_2$, l'isotherme de pression (en bars), en fonction du rapport masse H/masse $Mg_2Ni$, en %.

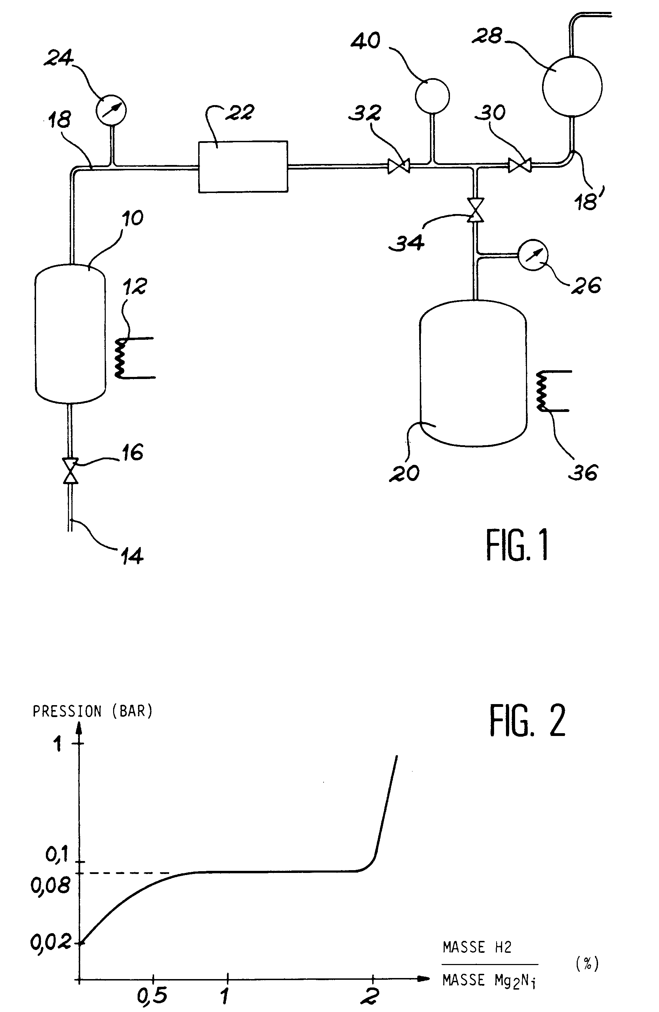

Sur la figure 1, la référence 10 désigne de façon schématique un piège froid saturé d'impuretés solides comportant notamment des oxydes de sodium, des hydrures de sodium et des tritiures de sodium.

Afin de permettre la régénération du piège froid 10 ainsi saturé, le réservoir du piège froid est équipé d'un système de chauffage 12, par exemple électrique, pourvu de moyens de régulation de température.

Un circuit de vidange 14 des effluents liquides, équipé d'une vanne 16, débouche dans le fond du réservoir du piège froid 10. De plus, un circuit 18 servant à évacuer les effluents gazeux débouche à la partie supérieure du réservoir du piège froid 10 ainsi qu'à la partie supérieure d'un deuxième réservoir 20 contenant un matériau métallique apte à absorber les effluents gazeux sortant du piège froid.

Un piège à vapeur de sodium 22 est placé dans le circuit 18 entre le piège froid 10 et le réservoir 20. Des manomètres 24 et 26 sont placés dans le circuit 18, à proximité immédiate du piège froid 10 et du réservoir 20, afin de mesurer les pressions dans chacun de ces réservoirs.

Un circuit 18' placé en dérivation sur le circuit 18 entre le piège 22 et le manomètre 26 est équipé d'une pompe 28 et d'une vanne 30. Deux vannes 32 et 34 sont également placées dans le circuit 18, entre le piège 22 et le manomètre 26, respectivement en amont et en aval du point de raccordement du circuit 18', et un détecteur de tritium 40 est intercalé entre les vannes 32 et 34.

Enfin, le réservoir 20 est également équipé d'un système de chauffage 36, par exemple électrique, muni de moyens de régulation de température.

Conformément à l'invention, la régénération du piège froid s'effectue en décomposant thermiquement le contenu de ce piège pour former des effluents liquides et des effluents gazeux et en absorbant dans le même temps les effluents gazeux ainsi formés sur le composé métallique contenu dans le réservoir 20, de façon à former un hydrure stable dans les conditions de fonctionnement du procédé.

Dans le cas particulier où le piège froid équipe le circuit secondaire d'un réacteur nucléaire à neutrons rapides, les impuretés solides qu'il contient sont surtout de l'hydrure de sodium et du tritiure de sodium dont la décomposition thermique s'effectue, à une température supérieure à environ 420°C, selon la réaction :

$$NaH \rightarrow Na_{L1} + \frac{1}{2} H_2 \quad (1)$$

où L1 signifie que le sodium est à l'état liquide et contient de l'hydrogène en solution.

Dans le cas où une certaine quantité d'oxyde de sodium est également présente dans le piège froid, sa transformation s'effectue selon la réaction :

$$Na_2O + \frac{1}{2} H_2 \rightarrow Na_{L2} + NaOH_{L3} \quad (2)$$

où L2 et L3 signifient respectivement que le sodium et l'hydroxyde de sodium sont à l'état liquide.

La réaction (2) s'effectue à une température supérieure à environ 410°C et sa cinétique n'est pas connue de façon précise.

Pour effectuer la décomposition thermique des impuretés solides lorsque le piège froid contient à la fois de l'hydrure de sodium et de l'oxyde de sodium, les réactions (1) et (2) doivent avoir lieu. Par conséquent, il est nécessaire de porter le piège froid à une température supérieure à environ 420°C.

Cependant, pour des raisons d'équilibre thermodynamique, les réactions (1) et (2) de décomposition de l'hydrure de sodium et de l'oxyde de sodium ne se réalisent pas de façon satisfaisante lorsque du sodium est présent dans le piège. Par conséquent, il est nécessaire dans un premier temps de vidanger la plus grande quantité possible de sodium et d'hydroxyde de sodium, avant d'entreprendre la décomposition des impuretés.

Pour cette raison, la première étape du procédé consiste alors à chauffer le piège froid 10 à l'aide du système de chauffage 12 à une température comprise entre environ 200°C et 320°C. A cette température, qui est inférieure à la température de décomposition des hydrures et des oxydes de sodium présents dans le piège, le sodium et la soude se trouvent à l'état liquide et peuvent être vidangés par ouverture de la vanne 16. Les vannes 30, 32 et 34 restent alors fermées, de telle sorte que le piège froid 10 est toujours isolé du réservoir 20.

Lorsque cette étape préliminaire est terminée, on augmente la température du piège froid 10 au moyen du dispositif de chauffage 12 jusqu'à une température de 430°C plus ou moins environ 20°C. Cette température permet de favoriser les réactions (2) de décomposition de l'oxyde de sodium $Na_2O$ en hydroxyde de sodium NaOH et (1) de décomposition de l'hydrure de sodium. Etant donné que la cinétique de la réaction (2) est lente, il est important que l'hydrogène formé par la réaction (1) reste un certain temps au contact de $Na_2O$ pour que la décomposition complète de ce dernier puisse avoir lieu. Par conséquent, les vannes 30, 32 et 34 sont maintenues fermées tant que cette décomposition n'est pas terminée.

Lorsque la quantité d'oxyde de sodium est importante, comme c'est notamment le cas dans un piège ayant fonctionné lors du démarrage d'un réacteur nucléaire ou après une réaction sodium/eau, la quantité d'hydrogène formée par la réaction (1) de décomposition de l'hydrure de sodium ne suffit pas à réduire la totalité de l'oxyde de sodium présent dans le piège. La transformation de l'oxyde est alors complétée en injectant dans le piège la quantité d'hydrogène manquant, par exemple à partir de bouteilles d'hydrogène (non représentées), qui sont alors raccordées sur le circuit 18, à proximité du piège froid 10. Pour éviter la formation d'hydroxyde de sodium tritié dans des proportions importantes, il peut être avantageux de transformer l'oxyde de sodium, par injection d'hydrogène, à partir des bouteilles, avant la décomposition thermique de l'hydrure.

Lorsque la transformation selon la réaction (2) de l'oxyde de sodium en hydroxyde de sodium est terminée, on augmente la température dans le piège froid pour accélérer conformément à l'invention la décomposition de l'hydrure de sodium selon la réaction (1). Simultanément, l'hydrogène et le tritium constituant les effluents gazeux de cette réaction sont absorbés sur le composé métallique contenu dans le réservoir 20.

Dans le cas particulier d'un piège ne contenant pas d'oxyde de sodium ou dans lequel l'oxyde et l'hydrure sont séparés à l'intérieur du piège (voir EP-A-0319409 correspondant à la demande de brevet français FR-A-2624032), il est à noter que le procédé de régénération selon l'invention ne comporte pas l'étape de décomposition de l'oxyde décrite précédemment.

Afin de réaliser l'absorption de l'hydrogène et du tritium dans le réservoir 20, on ouvre les vannes 32 et 34 et on maintient en permanence une pression d'hydrogène dans le réservoir 20 inférieure à la pression d'hydrogène dans le piège froid 10 pour que l'hydrogène libéré par la décomposition thermique effectuée dans ce dernier selon la réaction (1) soit transféré automatiquement dans le réservoir 20 pour y être absorbé.

De nombreux métaux ou alliages sont susceptibles d'absorber l'hydrogène, notamment $LaNi_5$, FeTi, U, $CaNi_5$, $Mg_2Ni$, $Mg_2Cu$ et V.

Le choix de ce matériau est fait en fonction de sa capacité et de sa vitesse d'absorption, de son coût et de la pression d'équilibre à la température ambiante du système formé par l'hydrogène et par ce matériau. En particulier, il est souhaitable que la vitesse d'absorption de l'hydrogène par le matériau contenu dans le réservoir 20 soit suffisamment élevée pour être compatible avec une installation industrielle, à la température maximum du réservoir 20 pour laquelle la pression dans ce réservoir reste inférieure à la pression dans le piège froid 10. Par ailleurs, il est souhaitable que la pression d'équilibre du système formé par l'hydrogène et par le matériau soit aussi faible que possible à la température ambiante, afin de faciliter le stockage du tritium en limitant les problèmes de fuites de tritium dûs à la diffusion de celui-ci à travers les parois du réservoir.

Le choix des matériaux contenus dans le réservoir 20 est compliqué par le fait que les matériaux présentant des pressions d'équilibre basses présentent généralement des vitesses d'absorption également faibles.

Les inventeurs ont établi que parmi les matériaux absorbants cités plus haut, ceux qui présentent le meilleur compromis entre les pressions d'équilibre et la vitesse d'absorption sont $Mg_2Ni$, U et $Mg_2Cu$.

Dans le cas particulier de l'alliage $Mg_2Ni$, les inventeurs ont vérifié qu'il n'y a pas d'effet isotopique, c'est-à-dire que l'hydrogène et le tritium sont absorbés selon la même cinétique.

Dans la pratique, l'ouverture des vannes 32 et 34 permettant la mise en communication du piège froid 10 avec le réservoir 20 s'accompagne d'un chauffage de ce dernier à l'aide du système de chauffage 36, jusqu'à une température suffisante pour favoriser l'absorption de l'hydrogène et du tritium sur le matériau contenu dans le réservoir. Dans le cas particulier où ce matériau est l'alliage $Mg_2Ni$, cette température est comprise entre 150°C et 300°C.

Afin d'accélérer la réaction (1) de décomposition de l'hydrure de sodium dans le piège froid 10 et aussi pour accroître la pression dans ce dernier dans le but de favoriser le transfert de l'hydrogène vers le réservoir 20, la température du réservoir 10 est augmentée jusqu'à une valeur comprise entre 450°C et 500°C. Cette température est maintenue pendant toute la durée de la décomposition de l'hydrure de sodium.

Simultanément, afin que l'absorption de l'hydrogène et du tritium s'effectue de façon satisfaisante sur l'alliage Mg$_2$Ni, la température du réservoir 20 est contrôlée afin que la pression d'hydrogène dans ce réservoir reste comprise entre 0,1 bar et 3 bars absolus lorsque la pression dans le réservoir 10 reste comprise entre 1 et 4 bars.

Lorsque la pression mesurée par le manomètre 24 dans le piège froid 10 n'augmente plus après fermeture de la vanne 32, cela signifie que la décomposition de l'hydrure de sodium est terminée. Les vannes 32 et 34 peuvent alors être refermées afin d'isoler le réservoir 20 du piège froid 10. Les effluents liquides tels que l'hydroxyde de sodium et le sodium formés dans ce dernier sont alors vidangés en ouvrant la vanne 16.

Les systèmes de chauffage 12 et 36 sont ensuite arrêtés de telle sorte que la température du piège froid et du réservoir 20 diminue jusqu'à la température ambiante. La pression dans le réservoir 20 renfermant l'alliage Mg$_2$Ni est alors d'environ 0,08 bar, conformément à la courbe de la figure 2. Le stockage de ces effluents gazeux peut donc être assuré dans des conditions de sécurité satisfaisantes. De plus, l'hydrogène et le tritium adsorbés peuvent être facilement récupérés en chauffant le réservoir 20 à une température d'environ 250°C à 300°C. L'hydrogène et le tritium libérés par l'alliage Mg$_2$Ni peuvent alors être pompés par le circuit 18', au moyen de la pompe 28, après ouverture des vannes 30 et 34.

Deux exemples de mise en oeuvre du procédé de régénération selon l'invention vont maintenant être décrits succintement.

**EXEMPLE 1.**

Le procédé de régénération selon l'invention a été appliqué à 1250 g d'hydrure de sodium. L'hydrure de sodium a été décomposé à une température située entre 450°C et 500°C.

L'hydrogène produit par la décomposition de l'hydrure de sodium a été absorbé sur 2500 g de Mg$_2$Ni chauffé entre 150°C et 180°C. La pression d'hydrogène au niveau de l'alliage Mg$_2$Ni durant le transfert était inférieure à 0,6 bar absolu. Dans ces conditions, la capacité d'absorption de Mg$_2$Ni a été trouvée égale à 2,2 %.

La pression finale d'hydrogène dans le réservoir renfermant l'alliage Mg$_2$Ni était de 0,080 bar absolu à 20°C.

A la fin de l'opération, le sodium a été vidangé.

La durée de la décomposition de l'hydrure de sodium a été de 7h 30, le débit de transfert devenant très faible après 5h de décomposition.

**EXEMPLE 2.**

180 g de Na$_2$O et 500 g de NaH d'un petit piège froid ont été soumis au procédé de régénération de l'invention.

On a vidangé un mélange de sodium et de soude et on a adsorbé 200l d'hydrogène sur la même quantité de Mg$_2$Ni (2500g) que pour l'exemple 1. On a constaté que la capacité d'absorption de ce dernier n'est pas modifiée par la présence de Na$_2$O, les conditions de mise en oeuvre étant par ailleurs identiques à celles qui sont données dans l'exemple 1. A la fin de l'opération, on a vérifié que l'intérieur du piège froid était propre et que les structures étaient peu affectées par la corrosion.

Bien entendu, le procédé de régénération selon l'invention n'est pas limité à la régénération d'un piège froid équipant un circuit de sodium. Ce procédé peut notamment être appliqué à tout réservoir contenant des hydrures ou des tritiures d'un métal liquide.

**Revendications**

1.  Procédé de régénération d'un piège froid d'un métal liquide tel que le sodium contenant des impuretés solides appartenant aux groupes des hydrures et des oxydes, ce procédé comprenant :
    - une étape de chauffage du piège (10) à une température comprise entre 200°C et 320°C ;
    - une étape d'élimination de sodium liquide par vidange du piège (10) ;
    - une étape de décomposition thermique des impuretés solides, par augmentation de la température du piège jusqu'à 430° + 20°C, pour former d'une part, des effluents liquides et, d'autre part, des effluents gazeux contenant de l'hydrogène et/ou ses isotopes ;
    - une étape d'élimination des effluents liquides par vidange du piège (10) ; et
    - une étape d'absorption des effluents gazeux sur un matériau métallique, pour former un hydrure stable à température ambiante, en faisant communiquer le piège à régénérer avec un réservoir (20) contenant le matériau métallique ;
    l'étape de décomposition thermique des impuretés solides comprenant une première opération de transformation totale des oxydes, selon la réaction effectuée à une température supérieure à environ 410°C
    
    $$Na_2O + 1/2H_2 \rightarrow NaL_2 + NaOHL_3,$$
    
    L$_2$ et L$_3$ signifiant respectivement que le sodium et l'hydroxyde de sodium sont à l'état liquide, préalable à l'étape d'absorption des effluents gazeux, et une deuxième opération de décomposition thermique totale des hydrures selon la réaction effectuée à une température supérieure à environ 420°C

$$NaH \rightarrow NaL_1 + 1/2H_2,$$

$L_1$ signifiant que le sodium est à l'état liquide et contient de l'hydrogène en solution, pendant laquelle s'effectue l'absorption des effluents gazeux.

2. Procédé selon la revendication 1, caractérisé par le fait que le matériau métallique est choisi dans le groupe comprenant LaNi$_5$, FeTi, U, V, CaNi$_5$, Mg$_2$Ni et Mg$_2$Cu.

3. Procédé selon la revendication 2, caractérisé par le fait que le matériau métallique est Mg$_2$Ni.

4. Procédé selon la revendication 3, caractérisé par le fait que le réservoir (20) est chauffé entre 150°C et 300°C.

5. Procédé selon l'une quelconque des revendications 1 à 4, caractérisé par le fait qu'on injecte de l'hydrogène dans le piège (10) à régénérer afin de réaliser la première opération de transformation thermique complète des oxydes.

6. Procédé selon l'une quelconque des revendications précédentes, caractérisé par le fait qu'après la mise en communication du piège (10) à régénérer avec le réservoir (20), on augmente la température du piège à régénérer jusqu'à une valeur supérieure à la température de décomposition thermique des impuretés solides, et on maintient cette température comprise entre 450°C et 500°C pendant toute la durée de la décomposition des impuretés solides.

7. Procédé selon l'une quelconque des revendications précédentes, caractérisé par le fait qu'on isole le piège (10) à régénérer du réservoir (20) lorsque la décomposition thermique des impuretés solides est terminée.

**Patentansprüche**

1. Verfahren zum Regenerieren einer Kältefalle aus einem flüssigen Metall, wie etwa aus Natrium, das feste Verunreinigungen enthält, die zu den Gruppen der Hydride und Oxyde gehört, wobei dieses Verfahren umfaßt:
   - einen Verfahrensschritt zum Erhitzen der Falle (10) auf eine Temperatur zwischen 200°C und 320°C;
   - einen Verfahrensschritt zum Entfernen des flüssigen Natriums durch Entleerung der Falle (10);

   - einen Verfahrensschritt zum thermischen Zersetzen der festen Verunreinigungen durch Erhöhen der Temperatur der Falle bis auf 430° ± 20°C, um auf der einen Seite flüssige Ausflüsse und auf der anderen Seite gasförmige Ausflüsse zu erzeugen, die Wasserstoff und/oder seine Isotope enthalten;
   - einen Verfahrensschritt zum Entfernen der flüssigen Ausflüsse durch Entleerung der Falle (10); und
   - einen Verfahrensschritt zum Absorbieren der gasförmigen Ausflüsse auf einem metallischen Material, um ein bei der Umgebungstemperatur stabiles Hydrid zu bilden, indem man die zu regenerierende Falle mit einen Reservoir (20) in Verbindung bringt, das das metallische Material enthält;

   wobei der Verfahrensschritt der thermischen Zersetzung der festen Verunreinigungen einen ersten Schritt zur vollständigen Umwandlung der Oxyde entsprechend folgender, bei einer Temperatur oberhalb von ungefähr 410°C durchgeführten Reaktion

$$Na_2O + 1/2\ H_2 \rightarrow NaL_2 + NaOHL_3$$

wobei $L_2$ und $L_3$ angeben, daß jeweils das Natrium und das Natriumhydroxyd im flüssigen Zustand sind, und zwar vor dem Verfahrensschritt der Absorption der gasförmigen Ausflüsse, und einen zweiten Schritt der vollständigen thermischen Zersetzung der Hydride entsprechend folgender, bei einer Temperatur oberhalb von ungefähr 420°C durchgeführten Reaktion umfaßt

$$NaH \rightarrow NaL_1 + 1/2\ H_2$$

wobei $L_1$ angibt, daß das Natrium im flüssigen Zustand ist und Wasserstoff in Lösung enthält, während dessen die Absorption der gasförmigen Ausflüsse stattfindet.

2. Verfahren nach Anspruch 1, gekennzeichnet durch die Tatsache, daß das metallische Material aus der Gruppe ausgewählt wird, die umfaßt: LaNi$_5$, FeTi, U, V, CaNi$_5$ Mg$_2$Ni und Mg$_2$Cu.

3. Verfahren nach Anspruch 2, gekennzeichnet durch die Tatsache, daß das metallische Material Mg$_2$Ni ist.

4. Verfahren nach Anspruch 3, gekennzeichnet durch die Tatsache, daß das Reservoir (20) auf eine Temperatur zwischen 150°C und 300°C erhitzt wird.

5. Verfahren nach einem der Ansprüche 1 bis 4, gekennzeichnet durch die Tatsache, daß man Wasserstoff in die zu regenerierende Falle (10) injiziert, um den ersten Schritt der vollständigen thermischen Umwandlung der Oxyde durchzuführen.

6. Verfahren nach einem der vorhergehenden Ansprüche, gekennzeichnet durch die Tatsache, daß man nach dem in Verbindung-Bringen der zu regenerierenden Falle (10) mit dem Reservoir (20) die Temperatur der Falle auf einen Wert oberhalb der thermischen Zersetzungstemperatur der festen Verunreinigungen erhöht und daß man diese Temperatur während der gesamten Dauer der Zersetzung der festen Verunreinigungen zwischen 450°C und 500°C hält.

7. Verfahren nach einem der vorhergehenden Ansprüche, gekennzeichnet durch die Tatsache, daß man die zu isolierende Falle von dem Reservoir (20) isoliert, sobald die thermische Zersetzung der festen Verunreinigungen beendet ist.

## Claims

1. Process for regeneration of a cold trap of a liquid metal, such as sodium containing solid impurities belonging to the hydride and oxide groups, this process comprising:
   - a step involving heating of the trap (10) to a temperature of between 200°C and 320°C;
   - a step involving removal of liquid sodium by emptying the trap (10);
   - a step involving thermal decomposition of the solid impurities, by raising the temperature of the trap up to 430° ± 20°C, in order to form, on the one hand, liquid effluents and, on the other hand, gaseous effluents containing hydrogen and/or its isotopes;
   - a step involving removal of the liquid effluents by emptying the trap (10); and
   - a step involving absorption of the gaseous effluents on a metal material, in order to form a hydride which is stable at ambient temperature, by connecting the trap to be regenerated to a reservoir (20) containing the metal material;
   the step involving thermal decomposition of the solid impurities comprising a first operation for complete conversion of the oxides, in accordance with the reaction carried out at a temperature higher than about 410°C
   $$Na_2O + 1/2H_2 \rightarrow NaL_2 + NaOHL_3,$$
   $L_2$ and $L_3$ indicating, respectively, that the sodium and the sodium hydroxide are in the liquid state, prior to the step involving absorption of the gaseous effluents, and a second operation for total thermal decomposition of the hydrides in accordance with the reaction carried out at a temperature higher than about 420°C
   $$NaH \rightarrow NaL_1 + 1/2H_2,$$

$L_1$ indicating that the sodium is in the liquid state and contains hydrogen in solution, during which step absorption of the gaseous effluents tales place.

2. Process according to Claim 1, characterised in that the metal material is chosen from the group comprising $LaNi_5$, FeTi, U, V, $CaNi_5$, $Mg_2Ni$ and $Mg_2Cu$.

3. Process according to Claim 2, characterised in that the metal material is $Mg_2Ni$.

4. Process according to Claim 3, characterised in that the reservoir (20) is heated to between 150°C and 300°C.

5. Process according to any one of Claims 1 to 4, characterised in that hydrogen is injected into the trap (10) to be regenerated in order to effect the first operation for complete thermal conversion of the oxides.

6. Process according to any one of the preceding claims, characterised in that, after connecting the trap (10) to be regenerated to the reservoir (20), the temperature of the trap to be regenerated is raised to a value higher than the thermal decomposition temperature of the solid impurities and this temperature of between 450°C and 500°C is maintained throughout the decomposition of the solid impurities.

7. Process according to any one of the preceding claims, characterised in that the trap (10) to be regenerated is isolated from the reservoir (20) when the thermal decomposition of the solid impurities is complete.

FIG.1

FIG. 2

PRESSION (BAR)

$\frac{MASSE\ H2}{MASSE\ Mg_2N_i}$ (%)

8